# EUROPÄISCHE PATENTSCHRIFT

(11) **EP 1 103 925 B1**
(45) Veröffentlichungstag und Bekanntmachung des Hinweises auf die Patenterteilung: **02.01.2008**
(21) Anmeldenummer: 00250401.7
(22) Anmeldetag: 24.11.2000
(51) Int. Cl.: G07B 17/04

(54) **Verfahren zum Piraterieschutz eines Gerätes und Anordnung zur Durchführung des Verfahrens**
Method for protecting an apparatus against piracy and arrangement for carrying out this method
Procédé pour la protection contre le piratage d'un appareil et dispositif pour sa mise en oeuvre

(30) Priorität: 26.11.1999 DE 19958946
(43) Veröffentlichungstag der Anmeldung: 30.05.2001
(73) Patentinhaber: Francotyp-Postalia GmbH, 16547 Birkenwerder (DE)
(72) Erfinder: Hetzer, Ulrich, 12679 Berlin (DE); Kopanski, Wilfried, 13503 Berlin (DE); Pauschinger, Dieter, Dr., 13465 Berlin (DE); Turner, Olaf, 12349 Berlin (DE)

(56) Entgegenhaltungen:
- EP-A- 0 825 564
- WO-A-97/40480
- WO-A-98/04414
- DE-A- 19 838 913
- US-A- 5 132 729
- US-A- 5 305 199
- US-A- 5 367 148

## Beschreibung

Die Erfindung betrifft ein Verfahren zum Piraterieschutz eines Gerätes gemäß des Oberbegriffs des Anspruchs 1 sowie eine Anordnung zur Durchführung des Verfahrens gemäß des Oberbegriffs des Anspruchs 14. Die unten stehende Lösung ist für die Erneuerung von Verbrauchsmaterial von Frankiermaschinen anwendbar. Dabei ist ohne Belang, ob es sich um Tinte, Tintenkartuschen für Ink Jet-Druckwerke oder um Thermotransferfarbbandkassetten oder um Rotationsdrucktrommeln handelt.

Frankiermaschinen sind seit den zwanziger Jahren bekannt und werden noch heute ständig vervollkommnet. Das Druckprinzip hat sich von ursprünglichen rein mechanischen Lösungen mit Drucktrommel zu elektronischen Lösungen mit Thermotransfer- oder Tintenstrahldruckkopf verändert. In die zunehmend elektronisierten Steuerungen wurden ab der 70er Jahre Mikroprozessoren und elektronische Guthabenspeicher eingesetzt. Ein gebräuchliches Bezahlungsprinzip pay before" beruht darauf, daß ein von einem Kundenkonto abgebuchter geldwerter Betrag, sog.

Guthabenbetrag, in der Frankiermaschine verwaltet wird. Bei jeder Frankierung wird dieser Guthabenbetrag durch den auf das Versandstück gedruckten Frankierbetrag reduziert. Die Frankiermaschine kann mit einem Guthabenbetrag nachgeladen werden. Zugleich sind spezielle Sicherheitsmaßnahmen entwickelt worden, die eine unbefugte Manipulation zum Schaden des Herstellers oder Nutzers oder der Postbeförderer verhindern oder detektieren sollen. Die Frankiermaschine verbraucht auch Druckfarbe und verschleißt die zur Drucktechnik gehörigen Teile, wobei es im Interesse des Nutzers und der Postbeförderer ist, wenn qualitativ hochwertiges eigenes Material des Herstellers verbraucht wird. Werden jedoch sogenannte Piraterieprodukte eingesetzt, hat dies Auswirkungen auf die Lebensdauer und Druckqualität der Maschine. Es könnte aber gestattet werden, daß ein Orginalprodukt vom Hersteller recycelt wird. Beispielsweise könnte autorisierte Tinte in eine Orginalkasette für ein druckendes Gerät nachgefüllt werden. Bisher ist es aber nicht möglich, sich ergebende Manipulationsmöglichkeiten völlig auszuschließen.

Unter dem Titel: Anordnung zur Tintenversorgung und Tintenentsorgung für einen Tintendruckkopf wurde im DE 196 13 944 C1 bereits eine für die Frankiermaschine vom Typ JetMail^{®} geeignete Tintenkassette mit zwei annähernd gleich aufgebauten Tintenbehältern vorgeschlagen. Der eine Tintenbehälter dient zur Entsorgung, der beim Primen aufgefangenen Tinte. Der andere Tintenbehälter dient zur Tintenversorgung und verfügt zwar über eine Tintenendeerkennung mit zwei Elektroden aber keinen Schutz gegenüber Wiederbefüllung mit einer vom Hersteller nicht autorisierten Tinte.

Eine Tintenendeerkennung mit Elektroden ist aus der DE 27 28 283 C2 vorbekannt. Im Boden des Tintenbehälters sind zwei Elektroden für eine Vergleichsmessung und eine separate Elektrode für eine Leitfähigkeitsmessung zur Tintenendesignalisierung eingebracht. Mittels einer elektronischen Schaltung wird der Übergangswiderstand zwischen diesen Elektroden gemessen und ausgewertet. Die Elektroden sind in Mulden angeordnet, die in den Behälterboden eingeformt sind. Voraussetzung für den Einsatz einer derartigen Tintenendeerkennung ist die Verwendung einer elektrisch leitfähigen Tinte. Ein Schutz gegenüber Wiederbefüllung mit einer anderen als der Orginaltinte ist aber nicht möglich.
Derartige Sensoren zur Tintenendeerkennung liefern der JetMail sicherheitshalber bereits ein Endesignal, wenn noch maximal 200 Frankierungen möglich sind, um ein wegen Tintenmangel unvollständig ausgedrucktes Frankierdruckbild zu vermeiden, daß bereits abgerechnet worden ist. Allerdings ist dann ein Primen bereits nicht mehr möglich. Für eine Nachbestellung eines Tintentankes wird das Endesignal in der Regel zu spät abgegeben.

Es sind bereits kassettenförmige Behälter mit Tintenflüssigkeit, Farbband oder Toner aus US 5.365.312 vorbekannt, die einen chipförmigen integrierten Schaltkreis mit einem elektronischen Speicher für einen den Vorratsbehälter identifizierenden Code, für ein Verfallsdatum und anderen Daten sowie mit einem Zähler aufweisen, um den Verbrauch beim Drucken durch Zählung der einzelnen Druckimpulse zu bestimmen, welche ausgedruckten Tintentropfen entsprechen. Der integrierte Schaltkreis speichert den aktuellen Füllstatus, welcher durch die Druckersteuerung ausgelesen und angezeigt werden kann. Da ein Neuprogrammieren des Chips und ein Wiederbefüllen des Behälters jedoch nicht möglich ist, kann der Behälter nicht einmal vom Hersteller recycelt werden.

Im DE 196 13 945 C2 wurde bereits eine Wiederverwendbarkeitssperre für einen Behälter für die Tintenversorgung eines Tintendruckkopfes vorgeschlagen. Eine Tintenverbindungsleitung ist von Tintendruckkopf an den Behälter mittels einer Hohlnadel durch einen gummielastischen Verschluß angedockt. Die eine Abdeckvorrichtung wird beim Abziehen des Behälters durch die Hohlnadel unumkehrbar ausgelöst. Ein wiederbefüllter Tintenvorratsbehälter kann nicht mehr angedockt werden. Leider verhindert diese Lösung auch die Wiederverwendung von mit Orginaltinte gefüllten Behältern. Die verbrauchten Tintentanks können zur ordnungsgemäßen Entsorgung lediglich an den Händler bzw. Service des Herstelles zurückgegeben werden. Es erscheint unvorteilhaft zu sein, wenn sogar ein vom Hersteller bereitgestelltes recyceltes Verbrauchsmaterial nicht wiederverwendet werden kann. Der Einsatz von genau kopierten Piraterie-Tintenvorratsbehältern kann damit leider auch nicht unterbunden werden. Erforderlich ist eine Unterscheidung von Originalverbrauchsmaterial von unautorisierten Kopien desselben sein. Das nicht vom Hersteller geprüfte oder durch ihn nicht frei gegebene Verbrauchsmaterial stellt eine Gefährdung der Lesbarkeit des Frankierabdruckes dar. Der Frankierabdruck muß von den Postbehörden visuell und maschinell lesbar sein, um die Portobezahlung verifizieren zu können. Das verwendete Verbrauchsmaterial muß deshalb zusammen mit anderen Komponenten der Frankiermaschine durch die Postbehörden zugelassen werden.

Aus der EP 730 974 A2 ist eine Lösung der Anmelderin speziell für Thermotransferfarbbänder bekannt. Dabei werden herstellerseitig dem Farbband Markierungen (z.B. ein Balkencode an den Anfang des Farbbandes) aufgeprägt. Nach dem Einsetzen des Farbbandes in die Frankiermaschine wird automatisch eine Detektierung dieser Markierung (z.B. mittels eines optischen Scanners) durchgeführt. Der Steuereinheit der Frankiermaschine wird der Dateninhalt der Markierung übermittelt und mit vorgespeicherten Referenzcodes verglichen. Diese Referenzcodes sind herstellerseitig nichtflüchtig in der Frankiermaschine gespeichert worden. Um dem Bekanntwerden der Codes entgegen zu wirken, ist auch bereits vorgeschlagen worden, diese Codes in gewissen Zeitabständen neu zu generieren, wobei diese von einem Datenzentrum des Herstellers mittels Datenfernübertragung in die Frankiermaschine gespeichert werden können. Jeder vom Datenzentrum gelieferte Code ist außerdem zeitlich limitiert, was einen Angriff nach Ablauf der vorbestimmten Zeitperiode verhindert. Bekannt ist auch das Zählen der Abdrucke an sich.
Nachteilig an obigem Verfahren ist die fehlende Synchronisierung zwischen der Ausgabe der neuen Codes für das Verbrauchsmaterial und der Speicherung der entsprechenden Referenzcodes in der Frankiermaschine einerseits und dem nicht vorhersehbaren Zeitpunkt des Erwerbes und Einbaues des Verbrauchsmaterials in die Frankiermaschine. Zwangsläufig kommt es dabei zu zeitlichen Überlappungen, wobei Verbrauchsmaterial mit alten Codes nicht mit den neu in der Frankiermaschine gespeicherten Referenzcodes zusammenspielt. Wenn man in diesen Übergangszeiten mehr als einen der Codes für gültig erklärt, wächst in diesem Maße auch die Gefahr, daß bekannt gewordene Codes mit unautorisertem Verbrauchsmaterial kombiniert werden und dies nicht detektiert werden kann.
Ein weiterer Nachteil ist die fehlende Information für den Hersteller, daß ein bestimmter Kunde unautorisiertes Verbrauchsmaterial einzusetzen versucht. Diese Information gewinnt lediglich die Frankiermaschine, welche dann nur in vorprogrammierter Weise etwa durch Verweigerung der Frankierung reagieren kann. Eine flexible Reaktion auf den Kunden etwa durch eine persönliche telefonische Verbindungsaufnahme seitens des Herstellers kombiniert mit einer zeitlich befristeten Erlaubnis, das unautorisierte Verbrauchsmaterial zu verwenden, ist so nicht möglich.

Aus der DE 198 38 913 A1 ist ein Verfahren zur Orginalitätsprüfung eines Erzeugnisses, wie zum Beispiel Arzneimittel, Nahrungs- und Genußmittel oder Elektronik- oder Softwareprodukten, bekannt, welches eine Information an den Hersteller liefert, ob ein bestimmter Kunde ein autorisiertes oder unautorisiertes Erzeugnis einsetzt. Letzteres kann aber weder erschwert noch verhindert werden. Folglich kann ein Gerät ohne rechliche Folgen und ohne Nachteile mit unautorisierten Verbrauchsmaterial betrieben werden, insbesondere wenn der Hersteller davon nicht zwangweise in Kenntnis gesetzt wird und somit einen evtl. Qualitätsverlust nicht sofort verhindern kann.

Es ist bereits bekannt einen bevorstehenden Wechsel von Verbrauchsmaterial via Display anzuzeigen. Bereits in der deutschen Offenlegungsschrift DE 195 49 376 A1 wurde durch die Anmelderin vorgeschlagen, Sensoren zur Bestimmung der Farbbandrestmenge auf Farbbandkassetten für einen Thermotransferdrucker einzusetzen oder die Anzahl an Abdrucken mittels der Steuerung des Thermotransferdruckers zu zählen. Das Zählen der Abdrucke bei den Piezo-Ink-Jet-Druckköpfen kann keine Information über die Tintenrestmenge im Tintentank liefern, weil bei einer geringen bis mittleren Anzahl an Frankierungen pro Tag der Verbrauch durch das Primen überwiegt, was die Anzahl an möglichen Abdrucken je Tintentankfüllung reduziert. Bei Piezo-Ink-Jet-Druckköpfen geht leider beim Primen ein Großteil an Tinte verloren und kann nicht wieder dem Kopf zugeführt werden. Es ist auch bekannt, den beim Primen verbrauchten Tintenteil wieder dem Kopf zuzuführen. Deshalb ist es zur sicheren Tintenversorgung wichtig, das Tintenende zu erkennen und rechtzeitig zu signalisieren.

Die Aufgabe der Erfindung ist es, ein Verfahren zum Piraterieschutz zu schaffen, das für beliebige Systeme geeignet ist und ohne einen zusätzlichen Hardwareaufwand auskommt. Die Verwendung von überlagerten alten Verbrauchsmaterialien, solchen schlechter Qualität von anderen Herstellern, und anderen unzulässigen Verbrauchsmaterialien, insbesondere Piraterieprodukten, soll weitgehend minimiert werden. Dabei soll sich der Schutz nach dem gleichen Verfahren auf unterschiedliche Verbrauchsmaterialien erstrecken, unabhängig von deren physischer Konsistenz. Das Verfahren soll sowohl für Maschinen mit als auch ohne einen direkten Kontakt zu einem Datenzentrum brauchbar sein.

Die Aufgabe wird mit den Merkmalen des Verfahrens nach dem Anspruch 1 beziehungsweise mit den Merkmalen der Anordnung nach dem Anspruch 14 gelöst.

Das Gerät, insbesondere eine Frankiermaschine, ist erfindungsgemäß mit Mitteln zum Erkennen einer Notwendigkeit des Wechselns eines Verbrauchsmaterials ausgestattet, wobei die Überprüfung der Gültigkeit einer eingegebenen Codezahl durch einen Mikroprozessor durchgeführt wird. Es wurde ein Piraterieschutz für Verbrauchsmaterial basierend auf dessen Authentifizierung entwickelt, wobei das Gerät die Authentizität überprüft, indem vom Hersteller veränderbare Bereichsgrenzen für die Codezahl im Gerät gespeichert sind und ein Größenvergleich der Codezahl zu den Bereichsgrenzen durchgeführt wird. Das Gerät ist beispielsweise eine Frankiermaschine mit einem Eingabemittel für die Codezahl. Der Hersteller liefert eine mit dem Verbrauchsmaterial aggregierte Codezahl. Wenn die Frankiermaschine über eine Chipkarten-Schreib/Leseeinheit verfügt, kann die Eingabe von Codezahl und ggf. weiteren Daten vorteilhaft per Chipkarte erfolgen, die mit dem Verbrauchsmaterial mitgeliefert wurde.
Es ist vorgesehen, daß bereits bei Herstellung durch einen Software-update der Frankiermaschine ein Codebereich erzeugt wird, der für einen Kunden reserviert und daß in der Frankiermaschine ein Codebereich für Referenzcodewörter gespeichert wird, daß in der Frankiermaschine mindestens ein erster Vergleich der eingegebenen Codezahl mit den Bereichsgrenzen vor dem Vergleich mit den gelisteten Referenz-Codezahlen durchgeführt wird, um einen Mißbrauch durch Gebrauch eines Piraterie-Produktes zu erkennen, und daß die Frankiermaschine auf einen Mißbrauch mindestens durch eine Signalisierung reagiert. Wenn ein neues Verbrauchsgut eingesetzt und zur eingegebenen Codezahl eine zugehörige Referenzcodezahl noch existiert, wird letztere durch streichen, löschen oder markieren im Speicher konsumiert. Eine wiederholte Benutzung einer zur Eingabe benutzten Chipkarte führt damit nicht mehr zum Erfolg. Hat der Benutzer ein neues Verbrauchsgut eingesetzt aber dann eine früher schon einmal benutzte Chipkarte mit konsumierter Codezahl (versehendlich) eingesteckt, wird eine Anzeige generiert und angezeigt, die den Benutzer zum Einstecken einer das neue Verbrauchsgut autorisierenden Chipkarte auffordert. Auf einer Chipkarte kann optional eine Verbrauchsgröße für eine Frankiermaschine gespeichert sein, die bei einem jeden Frankieren um eine entsprechende Größe verringert wird. Bei einem Farbband werden beispielsweise vorbestimmte Farbbandlängen konsumiert. Mit dem erfindungsgemäßen Verfahren wird es ermöglicht, verschiedene Verbrauchsmaterialien, unabhängig von deren physicher Konsistenz, mit dem im Prinzip gleichen Verfahren schützen zu können.
Das Gerät weist Sensoren zur direkten Erkennung von Zuständen auf, zum Beispiel einer Relativbewegung zwischen Druckträger und Druckkopf, zum Erkennen des Ein/Auszustandes oder zum Erkennen eines Unterschreitens einer vorbestimmten Restmenge, um die Notwendigkeit des Wechselns eines Verbrauchsmaterials zu signalisieren. Die vornannten Sensoren sind zum indirekten Erkennen eines weiteren Zustandes des Gerätes betriebsmäßig mit dem Mikroprozessor und mit Speichermitteln der Steuereinheit verbunden sind. Der Mikroprozessor des Gerätes ist programmiert:
- zum Unterscheiden eines Zustandes vor und nach dem Wechseln eines Verbrauchsmaterials, wobei ein Zustand vor dem Wechseln die Notwendigkeit des Wechselns signalisiert und wobei der weitere Zustand ein durchgeführtes Wechseln, des Verbrauchsmaterials signalisiert,
- für das Wechseln des Verbrauchsmaterials eine Mitteilung zu generieren und per Display (43) anzuzeigen und auf eine Eingabe eines Codes zu warten, für die Eingabemittel (4,10, 45) vorgesehen sind,
- zur Überprüfung der Gültigkeit und Authentizität des Verbrauchsmaterials im Gerät anhand des Referenzcodezahlenbereiches und Konsumieren der gespeicherten Referenzcodezahl, die der eingegebenen Codezahl zuordenbar ist, und
- zur Speicherung von Daten, die mit dem Wechseln des Verbrauchsmaterial in Beziehung stehen, sowie
- den Betrieb des Gerätes zu verändern, wenn die erfolgte Überprüfung der Codezahl im Gerät eine Ungültigkeit ergeben hat.

Bei einem Mißbrauch mit einem Piraterie-Produkt kann bereits wegen des ersten Vergleiches in der Frankiermaschine auch dann reagiert werden, wenn kein Kontakt nach einem Voice- oder Modem-Verfahren zum Teleporto Datenzentrum (TDC) besteht oder ein solcher Kontakt grundsätzlich nicht vorgesehen ist. Letzteres ist bei sogenannten Vorgabe-Frankier maschinen der Fall, d.h. Frankiermaschinen, welche zwecks Guthabennachladung zu einem Postamt transportiert werden müssen.
Außerdem ist vorgesehen, daß die Frankiermaschinen über das Mißverhältnis der zulässigen mit Codezahlen freigeschalteten Frankierungen und der tatsächlichen Frankierleistung einen Mißbrauch mit einem Piraterie-Produkt erkennt. Zu einem späteren Zeitpunkt, vorzugsweise während der Guthabennachladung kann bei einem Voice/Modem-Verfahren außerdem in dem entfernten Datenzentrum eine weitere Auswertung durchgeführt werden. Im Ergebnis können dann Marketing-Maßnahmen veranlaßt werden, um dem Mißbrauch mit Piraterie-Produkten entgegen zu treten.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Perspektivische Ansicht einer Frankiermaschine vom Typ T1000 von vom links,
- Figur 2,: Blockschaltbild der Frankiermaschine nach Fig.1,
- Figur 3,: Perspektivische Ansicht einer Frankiermaschine vom Typ JetMail^{®} von vom rechts,
- Figur 4,: Darstellung des Wechselns des Tintentanks bei Frankiermaschine vom Typ JetMail^{®},
- Figur 5,: Blockschaltbild der Frankiermaschine vom Typ JetMail^{®}.

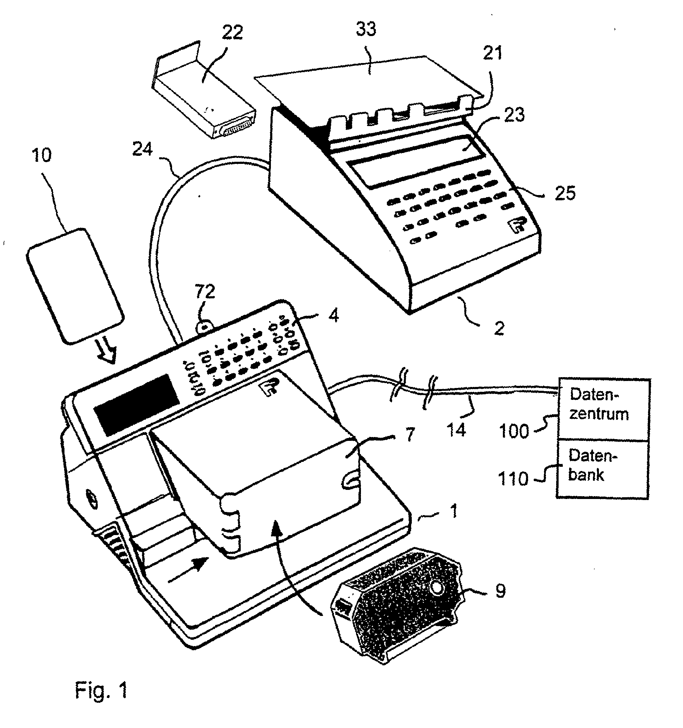

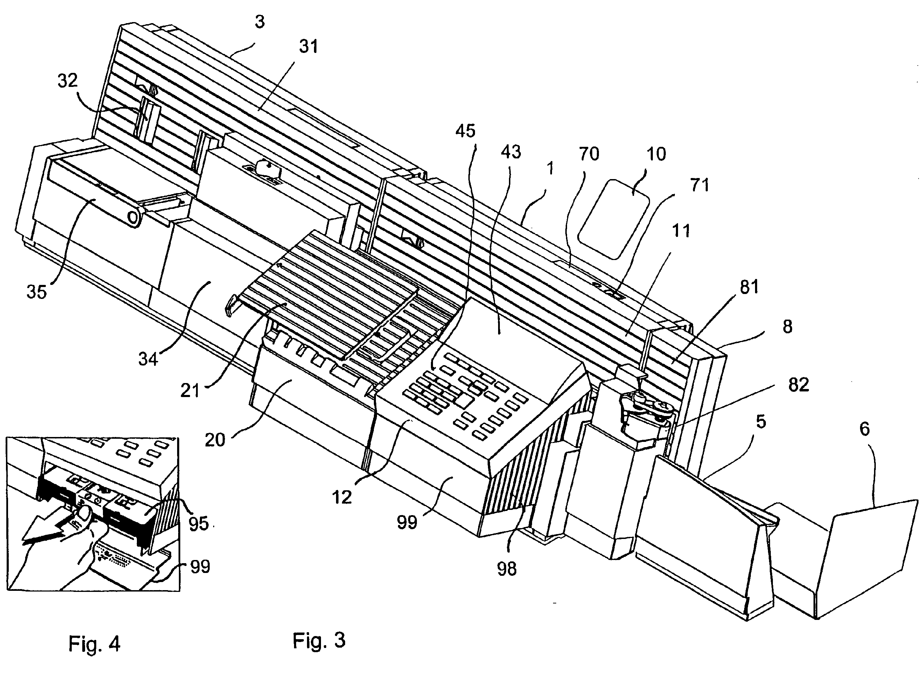

Die perspektivische Ansicht einer Frankiermaschine 1 vom Typ T1000, ist gemäß der Figur 1 von vorn links dargestellt. Die Frankiermaschine 1 hat ein internes Modem und ist beispielsweise zur Guthabennachladung über eine erste Datenverbindung 14 mit einem Datenzentrum 100 verbindbar, welches eine Datenbank 130 aufweist. Eine Chipkarte 10 dient erfindungsgemäß zur benutzerfreundlichen Eingabe der Codezahl des Verbrauchsgutes, einer Mindestanzahl an ausführbaren Frankierungen und/oder zur Durchführung von anderen bereits bekannten Eingaben, beispielsweise zur Einstellung der Frankiermaschine auf eine Kostenstelle, unter welcher die Abrechnung vorgenommen werden soll. Der Schlitz für ein Einstecken der Chipkarte ist - von vorn nicht sichtbar - auf der Rückseite der Frankiermaschine 1 angeordnet. Die Frankiermaschine 1 hat ein Kassettenfach 7, welches für ein Einsetzen einer Thermotransferfarbbandkassette 9 geöffnet werden muß. Eine Kassette vorbestimmten Types reicht für eine Mindestanzahl an ausführbaren Frankierungen. Ein - nicht dargestellter - Mikroprozessor eines Mikrocomputers, der die Frankiermaschine steuert, zählt die ausgeführten Abdruck bzw. Frankierungen und subtrahiert letztere von vorgenannter Mindestanzahl. Vom Mikroprozessor wird dann ein Anzeigetext generiert und auf dem Display eines Userinterface 4 erscheint eine Warnung, wonach vor dem Einsetzen einer vom Hersteller autorisierten Kassette 9 die mitgelieferte Chipkarte in einen Schlitz einer Chipkarten-Schreib/Lese-Einheit einzustecken sei. Die Warnung kann sich ggf. auch auf ein Weiterbetreiben der Frankiermaschine 1 mit einer nicht autorisierten Kassette beziehen, um Schäden, wie auch vorzeitige Alterung der Drucktechnik, und einem qualitativ verschlechterten Druckbild vorzubeugen. Der Mikroprozessor veranlaßt entweder eine OK-Mitteilung anzuzeigen oder eine Fehlermeldung (CALL SERVICE) abzugeben, wenn kein herstellerauthentisches Farbband erkannt werden konnte.
Andere physikalische Kennungen sind alternativ einsetzbar, beispielsweise bei einem Gerätetyp ohne eine Chipkarten-Schreib/Lese-Einheit. Beispielsweise ist dann das Aufkleben eines Barcodelabels mit der Codezahl möglich, welche visuell gelesen und manuell per Userinterface 4 eingegeben werden kann. Das Verbrauchsmaterial kann mit dieser Codezahl auch in anderer davon sehr unterschiedlicher Weise aggregiert werden.

Um beim Benutzer betriebenen Gerät die verschiedensten Verbrauchsmaterialien, unabhängig von deren physischer Konsistenz, mit dem gleichen Verfahren schützen zu können, wird beim Hersteller des Gerätes oder des Verbrauchsmaterials mindestens eine das Verbrauchsmaterial autorisierende Codezahl generiert. Die Zuordnung der Codezahl zu einem bestimmten Verbrauchsmaterial wird in einer Datenbank in Form eines Datensatzes mit Codezahl und Geräte-Identifikationsnummer gespeichert. Eine Aggregation des Verbrauchsmaterials mit der generierten Codezahl erfolgt beim Hersteller, indem einem zum Verkauf vorgesehenen Verbrauchsmaterial eine Codezahl, vorzugsweise in Form einer Chipkarte, beigefügt oder durch Befestigen oder vergleichbare Maßnahmen fest zugeordnet wird. Darunter fällt auch eine Markierung des Verbrauchsmaterials mit dieser Codezahl, die abhängig von der physischen Konsistenz des Verbrauchsmaterials in sehr unterschiedlicher Weise durch physikalische oder chemische Maßnahmen erfolgen kann. Zur Codezahl aus einer Gruppe von Codezahlen, welche im Datenzentrum 100 des Herstellers in der Datenbank 110 zugeordnet der Kundenadresse gespeichert vorliegen, steht diese Markier-Codezahl in einer vorbestimmten Beziehung. Nach dem Erkennen einer Notwendigkeit des Wechselns eines Verbrauchsmaterials in einem Gerät, beispielsweise Frankiermaschine, entfernt vom Datenzentrum, erfolgt ein Laden der mit dem Verbrauchsmaterial beispielsweise per Chipkarte aggregierten Codezahl. Im einfachsten Fall, wo eine Übereinstimmung mit der Referenzcodezahl vorliegt, kann die Authentizität durch die Operation Vergleichen überprüft werden. Das Gerät ist zum Laden einer neuen Gruppe an im Bereich liegenden Referenzcodezahlen ausgebildet. Es erfolgt on demand eine Übertragung von Referenzcodewörtern zum Gerät bzw. zur Frankiermaschine und ggf. eine spezielle Auswertehardware/-Software dafür.

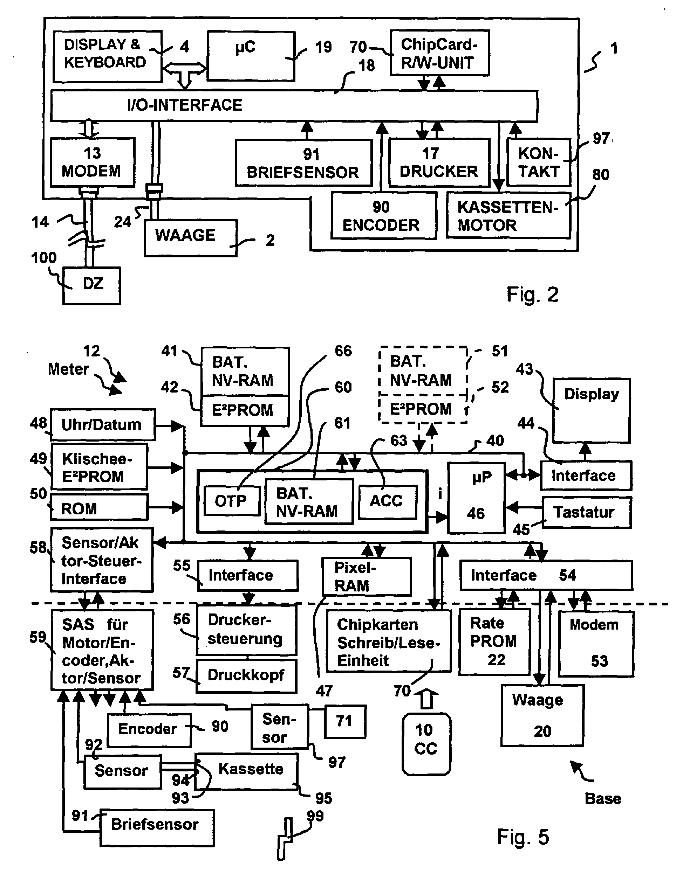

Anhand der Figur 2 wird ein Blockschaltbild erläutert, welches auf die - in der Fig.1 gezeigte - Frankiermaschine 1 oder ein anderes beliebiges Gerät zutrifft. Ein derartiges Gerät hat einen Mikrocomputer µP 19 zur Steuerung des Userinterfaces 4, eines Modems 13, einer Chipkarten-Schreib/Leseeinheit 70 und eines Druckers 17 mit Kassettenmotor 80 und/oder anderen nicht gezeigten Aktoren, welche über ein Ein/Ausgabe-Interface 18 an dem Mikrocomputer µP 19 angeschlossen sind. Außerdem sind in bekannter Weise weitere Sensoren, wie ein Encoder 90, Briefsensor 91 und ein Kontakt 97 angeschlossen.
Der Drucker 17 arbeitet mit einer Kassette zusammen und hat in üblicher Weise einen Druckkopf und eigene Sensoren und Aktoren bzw. einen weiteren Motor, was in der Figur 2 nicht näher gezeigt werden muß. Das Userinterface 4 weist in bekannter Weise eine Tastatur und ein Display mit Controller auf, was in der Figur 2 ebenfalls nicht näher gezeigt werden muß.

Wenn das vorgenannte Gerät eine Frankiermaschine 1 ist, kann am Ein/Ausgabe-Interface 18 eine Portorechner-Waage 2 über ein Kabel 24 zur Datenverbindung angeschlossen werden. Eine weitere Datenverbindung 14 dient zur Verbindung des Modems 13 mit dem Datenzentrum 100 zum Zwecke des Guthabennachladens.

Die Zuordnung eines bestimmten Codezahlenbereiches zu einer bestimmten Kundenadresse ist für einen Zeitraum fest, also nicht variabel und wird geheim gehalten. Zu jeder Codezahl existiert eine Referenzcodezahl. Wenn eine Codezahl per Chipkarte, d.h. nicht manuell via Userinterface 4 eingegeben wird, bleibt die Codezahl für den Benutzer unbekannt. Somit existiert eine größere Sicherheit des Codezahlenbereiches vor Ausspähung. Außerdem können zur Geheimhaltung bekannte Verschlüsselungsverfahren (DES, RSA usw.) eingesetzt werden. Die Referenzcodezahlen sind konsumierbar und auslesegesichert im nichtflüchtigen Speicher der Frankiermaschine gespeichert. Bei der Herstellung der Frankiermaschine wird eine Geräte-ldentifikations-Nummer (GIN) zugeordnet. Der Server einer Datenbank 110 eines Datenzentrums 100 ist programmiert, einen einzigartigen Codezahlenbereich zu bestimmen und zu der Geräte-ID-Nummer GIN im Speicher der Datenbank 110 zuzuordnen. Bei der Herstellung der Frankiermaschine erfolgt ein Speichern von Referenzcodezahlen der Menge B' im Speicher der Gerätes mit der Geräte-ID-Nummer, wobei jeweils einer Referenzcodezahl eine bestimmte Codezahl zugeordnet ist, die per Chipkarte zum Kunden gelangt. Für jeden Kunden erfolgt ein Vorsehen eines Codezahlenbereiches im Speicher der Datenbank 110, d.h. einer Kundenadresse in einer zentralen Kundenstammdatei wird eine Menge B an Codezahlen zugeordnet, welche innerhalb eines Codezahlenbereiches liegt. Weiterhin erfolgt ein Generieren einer Codezahl, die innerhalb des Zahlencodebereiches liegt, nach dem Zufallsprinzip durch einen Server des Datenzentrums 100. Eine Aggregation der zufälligen Codezahl und einer Stückzahl S an Drucken/Frankierungen mit dem Verbrauchsgut eines vorbestimmten Types kann durch Einspeichern entsprechender Daten in eine Chipkarte erfolgen, welche mitgeliefert wird. Das Liefern des Verbrauchsgutes ist mit der Aufforderung verbunden, die mit dem Verbrauchsgut mitgelieferte Zufallszahl mittels Chipkarte einzugeben oder alternativ zu lesen und mittels Userinterface 4 in das Gerät einzugeben. Ein Eingeben mittels der Chipkarte hat den Vorteil, daß neben der Codezahl auch eine Identifikationsnummer des Verbrauchsmaterials und eine Anzahl an Quantitäten, zum Beispiel eine Stückzahl S, für den Verbrauch beim Betrieb des Gerätes mühelos eingegeben werden können. Das Erkennen des Erfordernis des Wechselns eines Verbrauchsmaterials basiert auf einer verbrauchten Stückzahl/Anzahl an Quantitäten beim Betrieb des Gerätes und auf der Speicherung von den vorgenannten Daten, wie zum Beispiel die Stückzahl S, im Gerät, die mit dem Wechseln des Verbrauchsmaterials in Beziehung stehen. Nach einen vorbestimmten Verbrauch < S erfolgt ein Generieren einer entsprechenden Anzeige im Gerät zur Eingabe einer Codezahl. Ist jedoch der Verbrauch > S, so wird ein Zustand nach einem Wechseln des Verbrauchsmaterials erkannt, wobei aber keine Codezahl eingegeben wurde. Beispielsweise kann dann der Einsatz einer Pirateriekassette vermutet werden.

Der Drucker 17 einer Thermotransfermaschine schließt mindestens einen ansteuerbaren Motor ein. Letzterer treibt eine Gegendruckrolle für den Brieftransport an bewirkt die Relativbewegung zwischen Brief und Druckkopf, die mittels eines Encoders erfaßt wird. Die Aufwickelspule der Kassette der Frankiermaschine vom Typ T1000 wird von einem Kassettenmotor angetrieben. Die Geschwindigkeit des Farbbandes wird begrenzt, durch die beim Andruck auf die Briefkuvertoberfläche wirksame Adhäsionskraft des Thermotransferfarbbandes. Damit ein ordnungsgemäßes Aufwickeln möglich ist, hat die o.g. Relativbewegung eine Geschwindigkeit kleiner als die Geschwindigkeit des Farbbandes beim Aufwickeln. Die T1000 hat eine spezielle Kassette/Encoder-Anordnung, welche sich für eine indirekte Messung nutzen läßt. Das Farbband ist bei einer eingelegten Kassette mit dem Encoder 90 über ein Kassettenfenster in Eingriff gebracht. Da der Encoder 90 nur bei einem innerhalb einer Kassette transportierten Farbband seine Impulse an die Mikrocomputer steuerung 19 abgibt, kann die Anwesenheit einer Farbbandkassette von der Mikrocomputersteuerung 19 indirekt, d.h. ohne einen zusätzlichen Sensor festgestellt werden. Bisher wurde der Drucker 17 nur dann angesteuert, wenn ein Briefsensor 91 einen Brief im Transportpfad feststellt. Nun soll der Kassettenmotor des Druckers 17 auch in den Druckpausen in Zeitabständen angesteuert werden, wobei das Farbband nur um einen Bruchteil eines Millimeters transportiert wird. Es ist dafür völlig ausreichend, wenn der Kassettenmotor des Druckers 17 nur so kurz ange-steuert wird, daß nur die Aufwickelspule der Kassette bewegt wird, wobei der Encoder 90 mindestens einen Impuls abgibt, um die Anwesenheit einer Farbbandkassette zu detektieren.
Das Gerät detektiert und speichert die Anzahl an Frankierungen, wenn ein Ereignis festgestellt wird, das auf das Wechseln des Verbrauchsgutes schließen läßt. Als Ereignis soll neben einem Fehlen von Encoderimpulsen auch ein Wiedereinschalten nach einem Ausschalten der Frankiermaschine 1 gewertet werden. Letzteres wird von einem Kontakt 97 über das I/O-Interface 18 zum Mikrocomputer 19 übermittelt, falls ein - in der Figur 1 gezeigter - Schlüsselschalter 72 zum Einschalten der Maschine betätigt wird. Der Mikrocomputer 19 ermittelt die Anzahl an Frankierungen bis zum Ereignis, wenn das Ereignis mit einer vorbestimmten Anzahl übereinstimmt, für welche die Orginalkassette ausgelegt ist, erscheint in der Anzeige eine generierte Aufforderung zum Kassettenwechsel. Der Mikrocomputer 19 kann eine Anzeige generieren, welche der Benutzer durch eine Eingabe beantworten muß. Der Benutzer kann eine Codezahl eingeben. Bei der Überprüfung in der Frankiermaschine wird eine eingegebene Codezahl vom Mikrocomputer 19 zunächst daraufhin geprüft, ob letztere im Codezahlenbereich liegt. Es erfolgt dann eine Konsumtion durch Streichen der zufälligen Referenzcodezahl aus der ursprünglichen Menge B, wenn letztere im Codezahlenbereich liegt. Somit ergibt sich ein Vermindern der Anzahl der Referenzcodezahlen auf die Menge B-1. Während des Betriebes des Gerätes wird die Stückzahl an Drucken/Frankierungen gespeichert. Da der Codezahlenbereich endlich ist, wird eine Möglichkeit vorgesehen:
- zum Nachladen eines Codezahlenbereiches, wenn der Codezahlenbereich konsumiert ist,
- zum Nachladen einer neuen Gruppe an Referenzcodezahlen, wenn die Referenzcodezahlen des Referenzcodezahlenbereiches vom Gerät konsumiert sind.

Wenn der Benutzer jedoch keine Codezahl eingibt, wird die Anzahl an Frankierungen bis zum Ereignis weitergezählt. Die Ereignisse und die Anzahl werden im internen Speicher des Mikrocomputers 19 gespeichert. Der Mikroprozessor der Frankiermaschine erkennt über das Mißverhältnis der mit der Codezahl eingegebenen Anzahl an zulässigen Frankierungen und der tatsächlichen Frankierleistung einen unautorisierten Wechsel und liefert Daten zur Datenübermittlung an das Datenzentrum 100, insbesondere:
- für eine Datenübermittlung an das Teleporto Datenzentrum TDC beim nächsten Modem-Anruf. Die Datenübermittlung erfolgt durch Code per Modem automatisch. Die Codes enthalten eine verschlüsselte Information über das o.g. Mißverhältnis. Die Datenweiterleitung der Anzahl der tatsächlichen Frankierungen an das Teleporto Datenzentrum TDC macht einen evtl. Mißbrauch sichtbar, da bei letzterem die Zahl der freigegebenen Frankierungen deutlich erhöht sein würde;
- für eine Datenübermittlung an das Teleporto Datenzentrum TDC per Telefon bei einer Voice-Frankiermaschine erfolgt eine Generierung einer Anzeige von Zahlencodes, welche die verschlüsselte Information über das Mißverhältnis enthalten und an das Teleporto Datenzentrum TDC fernmündlich beim Nachladevorgang von Guthaben übermittelt werden. Wieder würde die in der Frankiermaschine gespeicherte Zahl der tatsächlichen Frankierungen bei einem Mißbrauch deutlich erhöht sein, was über die Registerstände ablesbar ist, die in die übermittelten Zahlencode eingehen;
- für eine Datenübermittlung vom Postbeamten, vom Benutzer der Frankiermaschine oder einem dazu Beauftragten, ggf. vom FP-Service-Techniker, an das Teleporto Datenzentrum TDC gemäß den vorgenannten FP-Übermittlungsverfahren.

Wenn das Datenzentrum 100 ein Teleporto Datenzentrum TDC ist, kann die Datenübermittlung in Verbindung mit einer Guthabennachladung erfolgen. Ist das Verbrauchsmaterial eine Kassette, dann wird optional eine Möglichkeit vorgesehen, zum Überprüfen im entfernten Datenzentrum 100 bzw. TDC, ob die Stückzahl an Drucken/Frankierungen plausibel zur Anzahl der Kassettenwechsel seit dem letzen Nachladen ist. Durch eine Information vom Datenzentrum 100 kann der Frankiermaschinenhersteller veranlaßt werden, auf das Kundenverhalten flexibel zu reagieren. Ein Service-Techniker kann zur Überprüfung der Kundenmaschine entsandt werden oder dem Kunden können Farbbandkassetten preisgünstiger offeriert werden, um sein zukünftiges Verhalten zu ändern. Auch wenn das Gerät weder gesperrt noch freigeschaltet werden soll, wenn die Codezahl nicht im Codezahlenbereich liegt, so könnte das Gerät allerdings mindestens veranlaßt werden, zukünftig immer langsamer zu arbeiten, je öfter der Kunde beim Wechsel Fremdprodukte einsetzt. Bei einer langsam arbeitenden Thermotransferdruckmaschine kann auch ein minderwertiges Farbband noch zu einer ausreichenden Druckqualität führen. Die Frankiermaschine kann automatisch in einen langsameren Betriebsmodus schalten bzw. wird vom FP-Service-Techniker langsamer eingestellt oder wird vom Datenzentrum ferneingestellt. Auch soll erst bei einer vorbestimmten Anzahl eingesetzter Fremdkassetten die Frankiermaschine einen Fehler anzeigen, der den Kunden veranlaßt, einen Blick in die Bedienungsanleitung zu werfen oder einen Servicetechiker zu rufen, der dem Kunden beispielsweise erklärt, daß Fremdprodukte die Frankiermaschinen vom Typ T1000 früher verschleißen würden. Der FP-ServiceTechiker könnte sogar vorführen, daß mit FP-Orginalkassetten die Frankiermaschine schneller läuft. Jedenfalls soll so der Kunde nicht gezwungen werden, auf Fremdkassetten völlig zu verzichten, vielmehr wird er dies freiwillig tun.
Der Vorteil der vorgeschlagenen Lösung liegt in der Abwärtskompatibilität bei den im Feld befindlichen Geräten bzw. Frankiermaschinen. Der Hersteller muß keinen Hardeware-Eingriff vornehmen, wie es bei einem zusätzlichem Sensor gemäß US 5,949,467 erforderlich wäre. Ein Software-update hingegen läßt sich durch ein günstiges Angebot an den Kunden, das neue Verfahren in Verbindung mit einem Preisnachlaß bei dem Verbrauchsmaterial offerieren. So kann für diese Kunden der Preis für die Farbbandkassetten reduziert werden. Diese Farbbandkassetten tragen Nr.-Aufkleber und der Kunde kauft damit die Anzahl an Frankierungen. Diese Farbbandkassetten werden nur den Kunden zugestellt, die an dem neuen Verfahren teilnehmen. Der Alt-Kunde, der in Zukunft auch die preisgünstigere Farbbandkassetten einsetzen möchte, benötigt dazu ein (kostenloses) Software-update, z.B. beim nächsten Technikerbesuch.

Für eine Frankiermaschine nach Figur 3 ist vorgesehen, daß das Verbrauchsmaterial ein mit Tinte gefüllter Tintentank ist. Für eine - nicht gezeigte - andere Frankiermaschine ist vorgesehen, daß das Verbrauchsmaterial ein Tintenstrahldruckkopf oder eine Kartusche ist. Der Tintenstrahldruckkopf, der eine integrierte Tintenpatrone hat, wird dabei ebenfalls als "Kartusche" bezeichnet. Ein derartiger Wegwerfdruckkopf ist zum Beispiel der Siemens-Typ DHP50.
Für ein Peripheriegerät ist vorgesehen, daß das Verbrauchsmaterial eine Flüssigkeit, beispielsweise Wasser für einen Briefbefeuchter und Briefschließer ist. Letzterer kann Bestandteil einer automatischen Zuführvorrichtung für Briefe sein.

Grundsätzlich kann die erfindungsgemäße Lösung auch bei Frankiermaschinen eines anderen Types, zum Beispiel bei einer Frankiermaschine mit Drucktrommel, angewendet werden. Für eine - nicht gezeigte - Frankiermaschine der Anmelderin mit Drucktrommel ist vorgesehen, daß das Verbrauchsmaterial eine Tinte ist. Nach dem Öffnen einer Abdeckung kann Tinte aus einer Flasche oder Tintenkartusche nachgefüllt werden. Die Codezahl ist auf der Flasche bzw. Tintenkartusche aufgedruckt oder auf einem Label, welches an letzteren befestigt ist. Eine Frankiermaschine mit Drucktrommel der Anmelderin vom Typ EFS hat ein Farbwerk mit einer stufenförmigen Abdeckung, die ein einfaches Nachfüllen der Druckstempelfarbe ermöglicht und einen ungewollten Austritt der Druckstempelfarbe verhindert (EP 269 883 B1).

Die Druckstempelfarbe läuft aus einer aufgeschraubten Kartusche in eine Farbkammer und wird mittels Rollen zur Drucktrommel befördert. Eine besonders einfache Variante geht davon aus, daß die Codezahl visuell lesbar als Zahl mit dem Verbrauchsmaterial mitgeliefert wird und daß der Benutzer das Eintippen der Zahl durch Betätigen entsprechender Bedienelemente vornehmen muß. Der Vorteil bei einer halbautomatischen Lösung liegt
a) im Wegfall des Aufwandes für einen Scanner in der Frankiermaschine,
b) im Schutz des flüssigen Verbrauchsmaterials Tinte, welcher dadurch erst ermöglicht wird.

Diese Lösung setzt ebenfalls das Mitzählen der Frankierungen bzw. Druckvorgänge voraus gegebenenfalls in Funktionsverbindung mit einem Tintenendesensor. Es ist vorgesehen, daß die Frankiermaschine eine Steuereinheit mit Prozessor aufweist, der programmiert ist, nach dem vorgenannten Erkennen eine Mitteilung zu generieren und per Display anzuzeigen und auf die Eingabe der Zahl zu warten, welche als Codezahl in einen Bezug zur Referenzcodezahl gesetzt wird.

Eine andere Variante verwendet einen Chip, in welchem die Codezahl gespeichert ist und durch Herstellung elektrischer Kontakte bei Installation des neuen Verbrauchsmaterials ausgelesen werden kann.

Eine - in der Fig.1 gezeigte - Portorechner-Waage 2 hat einen Wiegeteller 21, ein Display 23 und eine Tastatur 25 zur Eingabe von Versandinformationen über einen zubefördernden Brief 33. Wenn eine weitere Datenverbindung 24 zwischen den Geräten eines Systems besteht, kann von einem Gerät, beispielsweise von der Portorechner-Waage 2 eines Frankiersystems nicht nur das Gewicht, der Portowert und andere Daten zur Frankiermaschine 1 sondern außerdem eine Mitteilung übermittelt werden, beispielsweise welches Rate-PROM für die Portowertberechnung verwendet wird. Letzteres befindet sich innerhalb einer Speichereinschubkarte 22, die in der Portorechner-Waage 2 einsteckbar ist. Die Frankiermaschine 1 kann anhand von in einem Speicher gespeicherten Daten unterscheiden, ob eine autorisierte oder eine nicht autorisierte Portogebührentabelle in der Portorechner-Waage 2 verwendet wird.

Bei der in der Figur 3 von vom rechts dargestellten perspektivischen Ansicht einer Frankiermaschine vom Typ JetMail^{®} existiert eine interne Datenverbindung zu einer integrierten Waage 20, die nicht näher dargestellt ist. Die Waage 20 hat in an sich bekannter Weise einen Wiegeteller 21 und eine - nicht gezeigte - Wiegezelle mit Auswerteelektronik. Ein - nicht sichtbarer - Portorechner ist kein Bestandteil der Waage 20, sondern ein Bestandteil des Meters 12. Eine zur Portoberechnung benötigte Rate-PROM-Speicherbaugruppe kann ein Bestandteil des Meters 12 oder der Base der Frankiermaschine 1 sein, wobei es in modularer entfernbarer Form vorliegt. Die gewogenen Briefe werden einzeln stromaufwärts der Frankiermaschine 1 auf einer Kante stehend angelegt. Alternativ kann ein Stapel an Briefen mit jeweils einem Gewicht angelegt werden, daß in die gleiche Gewichtsgruppe bei der Portoberechnung fällt. Stromaufwärts der Frankiermaschine 1 ist eine automatische Zuführung 3 mit integrierter Vereinzelungsvorrichtung angeordnet. Ein Andruck-Bügel 35 kann hochgeklappt werden und drückt dann auf einen Poststapel, aus welchen mittels Abzugsrollen 32 Briefe vereinzelt werden. Unter einer Haube 34 befinden sich weitere Teile der Vereinzelungsvorrichtung. Ein Brief liegt an einer Führungsplatte 31 an und wird zur stromabwärts zur Führungsplatte 11 der Frankiermaschine 1 bewegt, wo der "Frankieren" genannte Druckvorgang erfolgt. Ein weiterbewegter frankierter Brief liegt an einer Führungsplatte 81 eines Schließmoduls 8 an. Ein Schließwalzenpaar 82 sorgt für das Verschließen noch nicht völlig geschlossener Briefkuverts und für den Auswurf über einen Einsatz 5 in den Ablagekasten 6. Der dargestellte Aufbau der Frankiermaschine vom Typ JetMail^{®} ist beispielsweise in der nicht vorveröffentlichten deutschen Patentanmeldung DE 199 00 686.5-27 näher beschrieben worden, unter dem Titel: Anordnung zum Schließen von Briefumschlägen. In der Führungsplatte 11 der Frankiermaschine 1 sind eine Chipkarten-Scheib/Lese-Einheit 70 und ein Ein/Ausschalter 71 angeordnet. Nach dem Einschalten kann eine Chipkarte 10 in Verbindung mit dem Userinterface 43, 45 zur vereinfachten Eingabe und Einstellung der Frankiermaschine verwendet werden. Das Userinterface 43, 45 befindet sich auf dem Meter 12 der Frankiermaschine 1. In dem deutschen Gebrauchsmuster DE 298 21 903 U1 ist ein international einsetzbares Userinterface näher erläutert worden.

Ein - nicht gezeigter - Mikroprozessor der Frankiermaschine 1 überwacht den Füllstand einer - in der Figur 4 - gezeigten Tintentankkassette 95 mittels eines Tintenendesensors. Letzterer kann gemäß dem deutschen Patent 196 13 944 C1 aus zwei Elektroden bestehenden. Derartige Sensoren liefern in der JetMail sicherheitshalber bereits ein Endesignal, wenn noch maximal 200 Frankierungen möglich sind, um ein wegen Tintenmangel unvollständig ausgedrucktes Frankierdruckbild zu vermeiden. Damit läßt sich ein nötiger bevorstehender Wechsel des Verbrauchsmaterials erkennen, wobei der Benutzer innerhalb eines Bereiches von 200 Frankierungen wieder eine mitgelieferte Chipkarte 10 in einen Schlitz der Chipkarten-Schreib/Lese-Einheit 70 einstecken kann, womit indirekt auf das Ereignis des Wechseln geschlossen werden kann. Falls innerhalb des vorgenannten Bereiches die Frankiermaschine über einen Netzschalter ausgeschaltet wird, was über einen Kontakt 71 feststellbar ist, dann kann indirekt auf das Ereignis des Wechseln geschlossen werden, wenn später die Anzahl an Frankierungen die Zahl 200 wesentlich übersteigt. Der Mikroprozessor generiert gegebenenfalls einen Anzeigetext zur Anzeige im Display 43: DER TINTENVORRAT IST FAST AUFGEBRAUCHT. BITTE TAUSCHEN SIE ALSBALD DEN TINTENTANK ! RESERVE IN ABDRUCKEN: 200.

Die Frankiermaschine 1 kann zwar noch mit der Reservetintenmenge weiterbetrieben werden. Der Mikroprozessor realisiert in seinem Speicherraum einen Rückwärtszähler, der durch das Tintenendesignal auf die Zahl 200 voreingestellt und mit jeder weiteren Frankierung um eins dekrementiert wird. Die Zahl 200 ergibt sich empirisch aus Erfahrungswerten für einen Rest an möglichen Abdrucken und einem Sicherheitsfaktor. Eine die Zahl von 200 wesentlich überschreitende Anzahl an Frankierdrucken läßt indirekt auf das Ereignis des Wechseln der Orginalkassette gegen eine nichtautorisierte, ggf. wiederaufgefüllte, Tintentankkassette schließen. Die den Rest kennzeichnende Zahl kann vor der nächsten Frankierung zur Anzeige gebracht werden. Nach jeder weiteren Frankierung generiert der Mikroprozessor eine Statuszeile, welche die Anzahl der verbleibenden Drucke anzeigt und gibt zum Ende die Meldung heraus: DER TINTENVORRAT IST AUFGEBRAUCHT. BITTE WECHSELN SIE DEN TINTENTANK.
Nach dem Öffnen der Klappe 99 des Tintenfaches 98 kann die verbrauchte Tintentankkassette 95 entnommen und in einen Plastikbeutel gesteckt werden, welcher eventuell auslaufende Tintenreste auffängt. Eine neue Tintentankkassette 95 kann aus der Verpackung entnommen und dabei überprüft werden, ob die Farbe der Tinte richtig ist. Dazu kann eine Lochcodierung auf der Rückseite der Tintentankkassette 95 herangezogen werden. Zugleich kann die neue Codezahl gelesen und eingegeben werden. Die Tintentankkassette 95 wird in - nicht gezeigte - seitliche Führungsschienen des Tintentankfaches 98 eingesetzt und eingeschoben, bis sie spürbar einrastet. Solange die Tintentankkassette nicht richtig eingesetzt ist, fehlt der Kontakt über die Elektroden 93, 94 und der Mikroprozessor generiert die Meldung: DER TINTENTANK FEHLT!
Beim Andocken der neuen mit leitfähiger Tinte gefüllten Tintentankkassette 95 wird automatisch der Kontakt über die Elektroden 93 und 94 der Tintentankkassette 95 zu einem vorhandenen Sensor geschlossen. Die Frankiermaschine erkennt dadurch, daß eine Tintentankkassette 95 als neues Verbrauchsmaterial installiert wurde. In Abhängigkeit von einer Lochcodierung auf der Rückseite der Tintentankkassette 95 kann mittels geeignet ausgebildeter - nicht gezeigter - weiterer Kontakte der ursprüngliche Tintentyp (Post rot, rot flureszierend, usw.) detektiert werden. Der Mikroprozessor generiert nun eine Meldung, die den Kunden über das Display entweder auffordert, die Tintentankkassette 95 wieder gegen eine andere mit zulässiger Farbe auszutauschen oder auffordert, die neue Codezahl einzugeben: CODEZAHL EINGEBEN. Diese Codezahl kann der Kunde beispielsweise mittels einer mitgelieferten Chipkarte 10 eingeben oder alternativ einem Aufdruck auf der Verpackung entnehmen und mittels der Tastatur 45 in die Frankiermaschine 1 eingeben. Liegt die eingegebene Codezahl außerhalb des gültigen Bereiches generiert der Mikroprozessor nun eine Meldung: GÜLTIGE CODEZAHL EINGEBEN !

Nachdem nun die Frankiermaschine 1 über die neue Codezahl verfügt, wird nach der Bereichsüberprüfung eine Überprüfung anhand der einzelnen Referenzcodezahlen der Menge B' durchgeführt. Die konsumierten Codezahlen werden gestrichen. Ist ein ganzer Codezahlenbereich aufgebraucht, kann ein neuer Codezahlenbereich nachgeladen werden. Dazu wird mit dem Datenzentrum des Herstellers eine Kommunikationsverbindung hergestellt. Moderne Frankiermaschinen sind heute bereits alle mit einem Modem ausgestattet, um mit dem Datenzentrum des Herstellers kommunizieren zu können. Dies dient normalerweise dazu, einen Guthabenbetrag vom Datenzentrum geladen zu bekommen, wenn der entsprechende Speicher leer frankiert wurde. Die Übertragung einer Gruppe an neuen Referenzcodewörtern bzw. in Form von Bereichsgrenzen des Codebereiches kann separat oder zusätzlich zur Kommunikation zwecks Fernladung der Frankiermaschine vorgesehen sein. Bekannte Maßnahmen der Datensicherung werden eingesetzt, um zu verhindern, daß die Referenzcodewörter auf der Übertragungsstrecke abgelauscht werden können. Die Frankiermaschine empfängt die zum neuen Verbrauchsmaterial 95 zugehörige Codezahl vorzugsweise durch ein Einstecken einer Chipkarte in die Frankiermaschine 1. In der Gruppe der gespeicherten Referenzcodewörter wird nach der passenden Codezahl gesucht. Wird es gefunden, gilt das angemeldete Verbrauchsmaterial als autorisiert und einer Weiterverwendung der Frankiermaschine 1 steht nichts im Wege. Wird die Codezahl nicht identifiziert, muß von einer gefälschten oder einer nicht mehr gültigen Codezahl ausgegangen werden. Bei einer gefälschten Codezahl hat der Kunde offenbar ein nicht autorisiertes Verbrauchsmaterial mit einer beliebigen Pseudocodezahl erworben, oder er hat sich eine solche erdacht und in Ermangelung einer autorisierten Codezahl eingegeben. Bei einer nicht mehr gültigen Codezahl wird geprüft, ob diese bereits einmal verwendet wurde. Wenn nein kann es sich um autorisiertes aber überlagertes Verbrauchsmaterial handeln. In dem Fall wäre zu prüfen, ob die Verwendung des Materials noch zulässig ist. Wurde die nun ungültige Codezahl bereits schon einmal verwendet, handelt es sich offensichtlich um einen Manipulationsversuch. Alternativ kann mittels spezieller Chipkarten eine Gruppe an neuen Referenzcodewörtern und die Bereichsgrenzen des Codebereiches geladen werden. Anderenfalls muß bei Frankiermaschinen älteren Types ohne Modem oder Chipkartenlesemöglichkeit ein FP-Service-Techniker gerufen werden, um eine Gruppe an neuen Referenzcodewörtern und die Bereichsgrenzen des Codebereiches zuladen.

In der Figur 5 ist Blockschaltbild einer Frankiermaschine vom Typ JetMail^{®} mit einer Steuereinheit (Meter) 12, die einen Prozessor 46 und Mittel 40 bis 58 aufweist, und mit einer Base gezeigt. Letztere schließt eine integrierte Waage 20, ein Rate-PROM 22, ein Modem 53 und einen Tintenendesensor 92 ein, mit dessen Hilfe im Meter 12 die Notwendigkeit des Wechselns der alten Tintentankkassette 95 erkannt wird. Nach dem Verbrauch der Tinte wird ein Tintenende mittels der Elektroden 93, 94 und dem Sensor 92 detektiert und über die Baugruppen SAS 59, Sensor/Aktor-Steuerinterface ASIC 58 dem Mikroprozessor 46 mitgeteilt, der daraufhin eine Anzeige generiert. Es verbleibt ein vorbestimmter Rest an Tinte der für ca. 200 Abdrucke reicht, wenn die Leitfähigkeit zwischen den Kontak-ten 93, 94 einen vorbestimmten Schwellwert unterschreitet. Ein Aus/Ein-schalten der Frankiermaschine 1 über den Schalter 71, während die Frankiermaschine nur noch über den Tintenrest verfügt, kann über den Sensor 97 detektiert werden, der ebenfalls an der SAS 59 angeschlossen ist. Kann die Frankiermaschine ohne einen über die Kontakte 93, 94 und den Sensor 92 detektierten Wechsel zur wiederhergestellten Leitfähigkeit zwischen den Kontakten 93, 94 über eine Anzahl von 200 Abdrucken hinaus weiter betrieben werden, dann ist dies ein Indiz dafür, daß zwischenzeitlich Tinte unautorisiert nachgefüllt wurde. In einer Reaktion darauf wird mindestens eine Anzeige generiert und ggf. eine Mitteilung zum Datenzentrum übermittelt, wenn ein Guthaben wieder nachgeladen werden muß.

Ein von der Anmelderin entwickelter Sicherheitsmodul 60 dient als erster Abrechnungsmodul und hat eine Hardware-Abrecheneinheit 63 und einen batteriegestützten nichtflüchtigen Speicher 61, in welchen per Modem 53 ein Guthaben geladen werden kann. Ein OTP-(One Time Programmable)-Prozessor 66 führt dabei Sicherheitsroutinen sowohl bei der Guthabennachladung, als auch zur Absicherung der Registerdaten mit einem MAC (Message Authentication Code) aus. Der Vorteil des Sicherheitsmoduls besteht darin, daß die Prüfung der Zuverlässigkeit und die Zulassung der erfindungsgemäßen Frankier- und Freimachungsmaschine, die durch den Postbeförderer erfolgt, dann nur noch für das betreffenden Prozessorsystem 60 und das angeschlossenen Druckermodul 55-57 erforderlich ist. Einen zweiten Verarbeitungsmodul bildet die Chipkarte 10 in Verbindung mit der Chipkarten-Schreib/Leseeinheit 70. Der Mikroprozessor 46 und die ersten Speicherbauelemente 41, 42 bilden dann einen dritten Verarbeitungsmodul und der Mikroprozessor 46 und die zweiten Speicherbauelemente 51, 52 (gestrichelt) bilden dann einen vierten Verarbeitungsmodul usw. In der Regel reicht ein Abrechenmodul aus und die anderen Verarbeitungsmodule können andere Aufgaben übernehmen. Die einzelnen Schritte des Verfahrens zum Piraterieschutz können beispielsweise im dritten Verarbeitungsmodul abgearbeitet werden.

Der Mikroprozessor 46 mit den zugehörigen Speichern 41, 42 wird zum Zählen der Abdrucke in Verbindung mit dem Erkennen eines Wechselns der Tintentankkassette programmiert sowie als Portorechner und zur Drucksteuerung verwendet. Der Abrechenmodul 60 dient zur Abrechnung und Berechnung von Verschlüsselungscodes mindestens zur Kommunikation mit dem Datenzentrum zwecks Guthabennachladung. Aufgrund dieser Aufgabenteilung ist der Abrechenmodul 60 zum Sicherheitsmodul weiterentwickelt worden. Alle Verarbeitungsmodule 41,42, 51,52, der Sicherheitsmodul 60 der Mikroprozessor 46, die Interface Baugruppen 44, 54 und 55, ein Hauptarbeitsspeicher Pixel-RAM 47, Uhr/Datums-Baustein 48, Klischee-EEPROM 49, Programmspeicher ROM 50 und ein ASIC mit dem Sensor/Aktor-Steuerinterface 58 sind an einen meter-internen BUS 40 der Steuerung angeschlossen. Mittels der Tastatur 45 wird eine Eingabe an die Ports des Mikroprozessors 46 zur entsprechenden Steuerung der Frankiermaschine 1 getätigt. Über die Interface Baugruppe 44 kann ein generiertes Schirmbild zum Display 43 gelangen. Das Display besitzt zur Unterstützung einen integrierten Controller.

Über das Sensor/Aktor-Steuer-Interface 58 sind weitere - hier nicht näher erläuterte - Sensoren und Aktoren der Base, ein Encoder 90 für die Briefbewegung und mindestens ein Briefsensor 91 sowie über das Interface 54 mindestens das Modem 53 elektrisch mit dem Meter 12 der Frankiermaschine 1 verbunden. Beide Interface-Schaltungen 54 und 58 können auch in einem Anwenderschaltkreis ASIC realisiert werden. Über das ASIC mit dem Sensor/Aktor-Steuerinterface 58 und einer Sensoren & Aktoren-Steuerung SAS 59 sind alle Aktoren und Sensoren in der Base ansprechbar bzw. abfragbar. Nähere Ausführungen hierzu sind dem EP 716 398 A2 entnehmbar, welches den Titel trägt: Frankiermaschineninterne Schnittstellenschaltung und Verfahren zur manipulationssicheren Druckdatensteuerung. Zur Steuerung der übrigen Komponenten in der Base und in der Peripherie sind weitere Ausführungen dem EP 875 864 A2 entnehmbar, welches den Titel trägt: Anordnung zur Kommunikation zwischen Stationen einer Postbearbeitungsmaschine.

Die Erfindung ist nicht auf die vorliegenden Ausführungsformen beschränkt. Vielmehr ist eine Anzahl von Varianten im Rahmen der Ansprüche denkbar. So können offensichtlich weitere andere Ausführungen der Erfindung entwickelt bzw. eingesetzt werden, die vom gleichen Grundgedanken der Erfindung ausgehend, von den anliegenden Ansprüchen umfaßt werden.

## Patentansprüche

1. Verfahren zum Schutz eines Gerätes vor einem Betreiben mit unzulässigem Verbrauchsmaterial, mit folgenden Schritten:
- Generieren eines Codezahlenbereiches und mindestens einer Codezahl, um ein Verbrauchsmaterial zu identifizieren, wobei die Codezahl in dem vorgenannten Codezahlenbereich liegt, welcher einer generierten Geräte-ID-Nummer zugeordnet wird,
- Speicherung der generierten Geräte-ID-Nummer, eines generierten Referenzcodezahlenbereiches und einer Gruppe von Referenzcodezahlen im Gerät, wobei diese Referenzcodezahlen im Referenzcodezahlenbereich liegen und jedes Referenzcodezahl eine bestimmte Codezahl zugeordnet ist,
- Aggregation des Verbrauchsmaterials mit der generierten Codezahl bei einer Anforderung des Kunden, wobei die generierte Codezahl einer Referenzcodezahl aus der Gruppe von Referenzcodezahlen zugeordnet ist,
- Erkennen einer Notwendigkeit des Wechselns eines Verbrauchsmaterials im Gerät entfernt vom Datenzentrum,
- falls mit dem Wechseln des Verbrauchsmaterials eine Codezahl eingegeben wurde, findet im Gerät eine Überprüfung der Gültigkeit und Authentizität des Verbrauchsmaterials statt, wobei anhand des Referenzcodezahlenbereiches zunächst geprüft wird, ob die eingegebene Codezahl im Codezahlenbereich liegt und dann eine Überprüfung stattfindet, ob zur eingegebenen Codezahl eine zugehörige Referenzcodezahl noch existiert,
- Konsumieren der gespeicherten Referenzcodezahl, die der Codezahl zuordenbar ist, sowie
- Steuern des Gerätes in Abhängigkeit vom Überprüfungsergebnis.

2. Verfahren, nach Anspruch 1, **gekennzeichnet durch** ein
- Zuordnen des Codezahlenbereiches für des Gerät mit vorgenannter Geräte-ID-Nummer zu einer Kundennummer für einen Kunden und Speichern im Speicher einer Datenbank entfernt vom Gerät,
- Speicherung der Zuordnung des angeforderten Verbrauchsmaterial in einer Datenbank des Datenzentrums in Form eines Datensatzes mit Kundennummer, Codezahl und Identifikationsnummer des Verbrauchsmaterials,
- Erkennen des Erfordernis des Wechselns eines Verbrauchsmaterials basierend auf einer Anzahl an Quantitäten für den Verbrauch beim Betrieb des Gerätes entfernt vom Datenzentrum und basierend auf der Speicherung von Daten im Gerät, die mit dem Wechseln des Verbrauchsmaterials in Beziehung stehen,
- Generieren einer entsprechenden Anzeige im Gerät zur Eingabe einer Codezahl, sowie
- Verändern des Betriebes des Gerätes, wenn die erfolgte Überprüfung der Codezahl im Gerät eine Ungültigkeit ergeben hat oder wenn keine Codezahl eingegeben wurde.

3. Verfahren, nach Anspruch 2, **gekennzeichnet durch** ein Herstellen einer Kommunikationsverbindung zum entfernten Datenzentrum zur Übermittellung der im Gerät gespeicherten Daten, wenn zwar ein Erfordernis des Wechselns eines Verbrauchsmaterials vom Gerät erkannt wurde, aber anschließend keine Codezahl in das Gerät eingegeben wurde.

4. Verfahren, nach Anspruch 2, **gekennzeichnet durch** ein Herstellen einer Kommunikationsverbindung zum entfernten Datenzentrum zum Nachladen eines neuen Referenzcodezahlenbereiches.

5. Verfahren, nach Anspruch 2, **gekennzeichnet durch** ein Herstellen einer Kommunikationsverbindung zum entfernten Datenzentrum zum Nachladen einer neuen Gruppe an Referenzcodezahlen, wenn die Referenzcodezahlen des Referenzcodezahlenbereiches konsumiert sind.

6. Verfahren, nach Anspruch 2, **gekennzeichnet durch** ein Verwenden einer Chipkarte zum Nachladen einer neuen Gruppe an Referenzcodezahlen, wenn die Referenzcodezahlen des Referenzcodezahlenbereiches konsumiert sind.

7. Verfahren, nach Anspruch 1, **gekennzeichnet durch** eine Aggregation des Verbrauchsmaterials mit einer Chipkarte und ein Eingeben der Codezahl und Identifikationsnummer des Verbrauchsmaterials mittels der Chipkarte.

8. Verfahren, nach Anspruch 7, **gekennzeichnet durch** ein Eingeben mittels der Chipkarte von Codezahl und Identifikationsnummer des Verbrauchsmaterials und einer Anzahl an Quantitäten für den Verbrauch beim Betrieb des Gerätes.

9. Verfahren, nach Anspruch 1, **gekennzeichnet dadurch, daß** die Eingabe der Codezahl unter Verwendung eines Userinterfaces (4) vorgenommen wird.

10. Verfahren, nach Anspruch 9, **gekennzeichnet dadurch, daß** dem zum Verkauf vorgesehenen Verbrauchsmaterial ein Codewort beigefügt oder durch Befestigen oder vergleichbare Maßnahmen fest zugeordnet wird und die Zuordnung des Codes zu einem bestimmten Verbrauchsmaterial in der Datenbank gespeichert wird.

11. Verfahren, nach Anspruch 9, **gekennzeichnet dadurch, daß** eine Markierung des Verbrauchsmaterials mit diesem Codewort abhängig von der physischen Konsistenz des Verbrauchsmaterials durch physikalische oder chemische Maßnahmen vorgenommen wird.

12. Verfahren, nach Anspruch 2, **gekennzeichnet dadurch, daß** das Erkennen des Erfordernis des Wechselns eines Verbrauchsmaterials im Gerät mittels einem indirekten Meßverfahren erfolgt.

13. Verfahren, nach Anspruch 1, **gekennzeichnet dadurch, daß** vom Hersteller des Verbrauchsmaterials ein das Verbrauchsmaterial identifizierendes Codewort generiert wird.

14. Anordnung zur Durchführung des Verfahrens gemäß Anspruch 1, mit einer Steuereinheit (12, 19) im Gerät, zur Überprüfung einer Codezahl mittels einer Referenzcodezahl im Gerät, mit Eingabemitteln (4, 10, 45) und mit Sensoren (90, 92, 97) zur direkten Erkennung von Zuständen, **gekennzeichnet dadurch, daß** vorhandene Sensoren (90, 92, 97) zum indirekten Erkennen eines weiteren Zustandes des Gerätes betriebsmäßig mit dem Mikroprozessor und mit Speichermitteln (41, 42, 50) der Steuereinheit (12, 19) verbunden sind, wobei der Mikroprozessor programmiert ist,
- zum Unterscheiden eines Zustandes vor und nach dem Wechseln eines Verbrauchsmaterials, wobei ein Zustand vor dem Wechseln die Notwendigkeit des Wechselns signalisiert und wobei der weitere Zustand ein durchgeführtes Wechselns des Verbrauchsmaterials signalisiert,
- für das Wechseln des Verbrauchsmaterials eine Mitteilung zu generieren und per Display (43) anzuzeigen und auf eine Eingabe einer Codezahl zu warten, für die Eingabemittel (4,10, 45) vorgesehen sind,
- zur Überprüfung der Gültigkeit und Authentizität des Verbrauchsmaterials im Gerät nach einem Wechseln des Verbrauchsmaterials und einer Eingabe einer Codezahl indem anhand des Referenzcodezahlenbereiches zunächst geprüft wird, ob die eingegebene Codezahl im Codezahlenbereich liegt und dann eine Überprüfung stattfindet, ob zur eingegebenen Codezahl eine zugehörige Referenzcodezahl noch existiert, und Konsumieren der gespeicherten Referenzcodezahl, die der eingegebenen Codezahl zuordenbar ist, und
- zur Speicherung von Daten, die mit dem Wechseln des Verbrauchsmaterials in Beziehung stehen, sowie um
- den Betrieb des Gerätes zu verändern, wenn die erfolgte Überprüfung der eingegebenen Codezahl im Gerät eine Ungültigkeit ergeben hat oder wenn eine fehlende Eingabe einer Codezahl festgestellt wird.

15. Anordnung, nach Anspruch 14, **gekennzeichnet dadurch, daß** das Verbrauchsmaterial ein Farbband in einer Kassette (9) und daß der vorhandene Sensor (90) zum indirekten Erkennen eines weiteren Zustandes des Gerätes ein Encoder ist.

16. Anordnung, nach Anspruch 14, **gekennzeichnet dadurch, daß** mittels vorhandener Sensoren (90, 92, 97) in Zusammenwirken mit einer vom Mikroprozessor (46) durchgeführten Auswertung gemessener und gespeicherter Daten indirekt die Anwesendheit von ausgewechselten Verbrauchsmaterial nach einem physikalisch Wirkprinzip festgestellt wird.

17. Anordnung, nach Anspruch 16, **gekennzeichnet dadurch, daß** das Verbrauchsmaterial eine elektrisch leitfähige Tinte einer auswechselbaren Tintentankkassette (95) ist, daß der Sensor (92) mit den Kontakten (93, 94) der Tintentankkassette (95) zum Erkennen des Erfordernis des Wechselns der Tintentankkassette (95) verbunden ist, wobei in Zusammenwirken mit einer vom Mikroprozessor (46) durchgeführten Auswertung gemessener und gespeicherter Daten indirekt die Feststellung der Anwesenheit von einer ausgewechselten Tintentankkassette (95) erfolgt.

18. Anordnung, nach Anspruch 14, **gekennzeichnet dadurch, daß** daß das Verbrauchsmaterial Tinte für einen Tintenstrahldruckkopf (57) mit integrierten Tintentank ist.

19. Anordnung, nach Anspruch 14, **gekennzeichnet dadurch, daß** das Verbrauchsmaterial eine Flüssigkeit ist und wobei ein Code mittels einer Kennung des Verpackungsmaterials eingebbar ist, welcher für die Flüssigkeit kennzeichnend ist.

20. Anordnung, nach Anspruch 14, **gekennzeichnet dadurch, daß** sich das Verbrauchsmaterial in einem nichtfesten Aggregatzustand befindet.

21. Anordnung, nach Anspruch 14, **gekennzeichnet dadurch, daß** das Verbrauchsmaterial ein fester Körper ist.

22. Anordnung, nach Anspruch 14, **gekennzeichnet dadurch, daß** das Gerät eine Frankiermaschine (1) ist, daß ein Speichern der Stückzahl an Drucken/Frankierungen während des Betriebes erfolgt, daß der Mikroprozessor der Frankiermaschine über ein Mißverhältnis der mit der Codezahl eingegebenen Anzahl an zulässigen Frankierungen und der tatsächlichen Frankierleistung einen unautorisierten Wechsel erkennt und Daten zur Datenübermittlung an ein Datenzentrum (100) liefert.

23. Anordnung, nach Anspruch 22, **gekennzeichnet dadurch, daß** der Mikroprozessor (46) eine Anzeige von Zahlencode für das Display (43) generiert und daß die Datenübermittlung mittels Codes per Telefon erfolgt, wobei die Codes die verschlüsselte Information über das Mißverhältnis enthalten.

24. Anordnung, nach Anspruch 23, **gekennzeichnet dadurch, daß** die Datenübermittlung vom Benutzer der Frankiermaschine oder einem dazu Beauftragten bzw. Postbeamten ausgelöst wird.

25. Anordnung, nach Anspruch 22, **gekennzeichnet dadurch, daß** die Datenübermittlung per Modem automatisch erfolgt, wobei die Codes die verschlüsselte Information über das Mißverhältnis enthalten.

26. Anordnung, nach einem der Ansprüche 22 bis 25, **gekennzeichnet dadurch, daß** das Datenzentrum (100) ein Teleporto Datenzentrum (TDC) ist und daß die Datenübermittlung in Verbindung mit einer Guthabennachladung erfolgt.

27. Anordnung, nach Anspruch 22, **gekennzeichnet dadurch, daß** das Datenzentrum (100) mit einer Datenbank (110) und Mitteln im Server ausgestattet ist, zur Überprüfung, ob die Stückzahl an Drucken/Frankierungen plausibel zur Anzahl der Kassettenwechsel seit dem letzen Nachladen ist.

## Claims

1. A method for protecting a device from operation with inadmissible consumables comprising the following steps:
- generation of a code number range and of at least one code number for identifying a consumable, wherein said code number is within said code number range that is assigned to a generated device ID number;
- storage of the generated device ID number, of a reference code number range and of a group of reference code numbers in the device, wherein said reference code numbers are within the reference code number range and a certain code number is assigned to every reference code number;
- aggregation of the consumables with the generated code number upon request of the customer, wherein the generated code number is assigned to a reference code number from the group of reference code numbers;
- detection of a necessity of replacement of a consumable in the device located remotely from the data center;
- if a code number was entered with the replacement of the consumable, validity and authenticity of the consumable are verified in the device, wherein it is first verified by means of the reference code number range whether the code number entered is within the code number range and then it is verified whether there still exists a reference code number belonging to the code number entered;
- consumption of the stored reference code number that is assignable to the code number; as well as
- control of the device depending on the result of the verification.

2. A method according to Claim 1, **characterized by**
- assignment of the code number range for the device with the above-mentioned device ID number to a customer number for a customer and storage in the memory of a database remote from the device;
- storage of the assignment of the requested consumable in a database of the data center in the form of a data record with customer number, code number and identification number of the consumable;
- detection of the necessity of replacement of a consumable based on a number of quantities for the consumption in the operation of the device remote from the data center and based on the storage of data in the device that are related to the replacement of the consumable;
- generation of a respective display in the device for entering a code number; as well as
- change of the operation of the device if the verification of the code number in the device has shown invalidity or if no code number has been entered.

3. A method according to Claim 2, **characterized by** establishing a communication connection to the remote data center for transmitting the data stored in the device when a necessity of replacement of a consumable was detected by the device, but no code number was entered in the device then.

4. A method according to Claim 2, **characterized by** establishing a communication connection to the remote data center for reloading a new reference code number range.

5. A method according to Claim 2, **characterized by** establishing a communication connection to the remote data center for reloading a new group of reference code numbers when the reference code numbers of the reference code number range have been consumed.

6. A method according to Claim 2, **characterized by** utilization of a chip card for reloading a new group of reference code numbers when the reference code numbers of the reference code number range have been consumed.

7. A method according to Claim 1, **characterized by** aggregation of the consumable with a chip card and by entering the code number and identification number of the consumable by means of the chip card.

8. A method according to Claim 7, **characterized by** entering, by means of the chip card, the code number and identification number of the consumable and a number of quantities for the consumption during operation of the device.

9. A method according to Claim 1, **characterized in that** the code number is entered using a user interface (4).

10. A method according to Claim 9, **characterized in that** a codeword is attached to the consumable intended for sale or is firmly assigned to it by means of affixing or a comparable measure and that the assignment of the codeword to a certain consumable is stored in the database.

11. A method according to Claim 9, **characterized in that** the consumable is marked with said codeword by means of physical or chemical measures depending on the physical consistence of the consumable.

12. A method according to Claim 2, **characterized in that** the necessity of the replacement of a consumable is detected in the device by means of an indirect measuring method.

13. A method according to Claim 1, **characterized in that** a codeword identifying the consumable is generated by the manufacturer of the consumable.

14. An arrangement for implementing the method according to Claim 1, with a control unit (12, 19) in the device for verification of a code number by means of a reference code number in the device, with input means (4, 10, 45) and with sensors (90, 92, 97) for a direct detection of statuses, **characterized in that** existing sensors (90, 92, 97) for indirect detection of a further status of the device are operationally connected with the microprocessor and with memory means (41, 42, 50) of the control unit (12, 19), the microprocessor being programmed
- for distinguishing between a status before and after replacement of a consumable, wherein a status before replacement signals the necessity of replacement and wherein the further status signals a completed replacement of the consumable;
- for generating a message for the replacement of the consumable and showing it on a display (43) and for waiting for the input of a code number for which the input means (4, 10, 45) are provided;
- for verifying the validity and authenticity of the consumable in the device after replacement of the consumable and input of a code number, by verifying first, on the basis of a reference code number range, whether the code number entered is within the code number range, verifying then whether there does still exist a reference code number belonging to the code number entered, and consuming the stored reference code number that is assignable to the code number entered; and
- for storing data related to the replacement of the consumable; as well as
- for changing the operation of the device when the verification of the code number entered in the device has shown invalidity or when a lack of input of a code number is detected.

15. An arrangement according to Claim 14, **characterized in that** the consumable is an ink ribbon in a cassette (9) and that the existing sensor (90) for indirectly detecting a further status of the devise is an encoder.

16. An arrangement according to Claim 14, **characterized in that**, by means of existing sensors (90, 92, 97) in interaction with an analysis of measured and stored data made by the microprocessor (46), the presence of replaced consumable is detected according to a physical functional principle.

17. An arrangement according to Claim 16, **characterized in that** the consumable is an electrically conductive ink of a replaceable ink-tank cartridge (95) and that the sensor (92) is connected to the contacts (93, 94) of the ink-tank cartridge (95) for detecting the necessity of replacement of the ink-tank cartridge (95), wherein, in interaction with an analysis of measured and stored data by the microprocessor (46), the presence of a replaced ink-tank cartridge (95) is indirectly determined.

18. An arrangement according to Claim 14, **characterized in that** the consumable is ink for an ink-jet print head (57) with an integrated ink tank.

19. An arrangement according to Claim 14, **characterized in that** the consumable is a liquid and a code can be entered by means of an identification on the packaging material that is characteristic of the liquid.

20. An arrangement according to Claim 14, **characterized in that** the consumable is in a non-solid state of aggregation.

21. An arrangement according to Claim 14, **characterized in that** the consumable is a solid body.

22. An arrangement according to Claim 14, **characterized in that** the device is a franking machine (1), that the piece number of prints/franking operations during operation is stored and that the microprocessor of the franking machine considers a disproportion between the number of admissible franking operations entered with the code number and the actual number of franking operations to be an unauthorized replacement and delivers data for transmission to a data center (100).

23. An arrangement according to Claim 22, **characterized in that** the microprocessor (46) generates a display of number code for the display (43) and that the data transmission by means of codes is effected by telephone, the codes containing the encoded information on the disproportion.

24. An arrangement according to Claim 23, **characterized in that** the data transmission is triggered by the user of the franking machine or by a person authorized to do that or by a postal clerk.

25. An arrangement according to Claim 22, **characterized in that** the data transmission is automatically effected by modem, the codes containing the encoded information on the disproportion.

26. An arrangement according to one of Claims 22 to 25, **characterized in that** the data center (100) is a Teleporto Data Center (TDC) and that the data transmission is made in connection with a credit reload.

27. An arrangement according to Claim 22, **characterized in that** the data center (100) is equipped with a database (110) and means in the server for verification if the piece number of prints / franking operation is plausible in relation to the replacements of cassettes since the last reload.

## Revendications

1. Procédé de protection d'un appareil contre une marche à l'aide de matières consommables non autorisées comprenant les démarches suivantes :
- génération d'une plage de chiffres codés et d'au moins un chiffre codé permettant d'identifier une matière consommable en sachant que le chiffre codé est compris au sein de la plage de chiffres codés indiquée ci-dessus qui est affectée à un numéro d'identification d'appareil généré,
- mémorisation du numéro d'identification d'appareil généré, d'une plage de chiffres codés de référence et d'un groupe de chiffres codés de référence sur l'appareil en sachant que ces chiffres codés de référence sont compris au sein de la plage de chiffres codés et qu'un certain chiffre codé est affecté à chaque chiffre codé de référence,
- agrégation de la matière consommable avec le chiffre codé généré à la demande du client en sachant que le chiffre codé généré est affecté à un chiffre codé de référence issu du groupe de chiffres codés de référence,
- détection d'une nécessité de remplacer une matière consommable sur l'appareil à distance du centre de données,
- au cas où un chiffre codé aurait été introduit lors du remplacement de la matière consommable, une vérification de la validité et de l'authenticité de la matière consommable s'opère dans l'appareil en sachant que l'on commence par vérifier sur la base de la plage de chiffres codés de référence si le chiffre codé qui a été introduit est compris au sein de la plage de chiffres codés avant de vérifier s'il existe encore un chiffre codé de référence se rapportant au chiffre codé introduit,
- consommation du chiffre codé de référence mémorisé pouvant être affecté au chiffre codé ainsi que
- commande de l'appareil en fonction du résultat de la vérification.

2. Procédé selon la revendication 1, **caractérisé en ce que**
- la plage de chiffres codés pour l'appareil au numéro d'identification d'appareil indiqué ci-dessus est affectée au numéro de client destiné à un client et mémorisée dans la mémoire d'une banque de données à distance de l'appareil,
- l'affectation de la matière consommable requise est mémorisée dans une banque de données du centre de données sous forme d'un article de données comportant le numéro de client, le chiffre codé et le numéro d'identification de la matière consommable.
- détection du besoin de remplacer une matière consommable sur la base d'un certain nombre de quantités pour la consommation lors du fonctionnement de l'appareil à distance du centre de données et sur la base de la mémorisation de données dans l'appareil qui se rapportent au remplacement de la matière consommable,
- génération d'un affichage correspondant sur l'appareil pour introduction d'un chiffre codé ainsi que
- modification de la marche de l'appareil si la vérification du chiffre coré effectuée sur l'appareil a révélé une invalidité ou si aucun chiffre codé n'a été introduit.

3. Procédé selon la revendication 2, **caractérisé par** l'établissement d'une liaison de communication avec le centre de données à distance pour transmission des données mémorisées sur l'appareil, lorsqu'une nécessité de remplacer une matière consommable a été certes détectée par l'appareil, mais lorsqu'aucun chiffre codé n'a été introduit ensuite dans l'appareil.

4. Procédé selon la revendication 2, **caractérisé par** l'établissement d'une liaison de communication avec le centre de données à distance pour rechargement d'une nouvelle plage de chiffres codés de référence.

5. Procédé selon la revendication 2, **caractérisé par** l'établissement d'une liaison de communication avec le centre de données à distance pour rechargement d'un nouveau groupe de chiffres codés de référence, lorsque les chiffres codés de référence de la plage de chiffres codés de référence sont consumés.

6. Procédé selon la revendication 2, **caractérisé par** l'utilisation d'une carte à puce pour rechargement d'un nouveau groupe de chiffres codés de référence, lorsque les chiffres codés de référence de la plage de chiffres codés de référence sont consumés.

7. Procédé selon la revendication 1, **caractérisé par** une agrégation de la matière consommable avec une carte à puce et une introduction du chiffre codé et du numéro d'identification de la matière consommable à l'aide de la carte à puce.

8. Procédé selon la revendication 7, **caractérisé par** une introduction du chiffre codé et du numéro d'identification de matière consommable à l'aide de la carte à puce et d'un certain nombre de quantités pour la consommation pendant la marche de l'appareil.

9. Procédé selon la revendication 1, **caractérisé en ce que** l'introduction du chiffre codé est effectuée par utilisation d'une interface d'utilisateur (4).

10. Procédé selon la revendication 9, **caractérisé par** l'adjonction ou par l'affectation fixe ou autre mesure comparable d'un mot codé à la matière consommable prévue pour la vente et par la mémorisation de l'affectation du code à une certaine matière consommable dans la banque de données.

11. Procédé selon la revendication 9, **caractérisé par** un marquage de la matière consommable effectué à l'aide de ce mot codé en fonction de la consistance physique de la matière consommable par des mesures physiques ou chimiques.

12. Procédé selon la revendication 2, **caractérisé par le fait que** la détection de la nécessité de remplacer une matière consommable dans l'appareil est effectuée au moyen d'un procédé de mesure indirect.

13. Procédé selon la revendication 1, **caractérisé par** la génération par le fabricant de la matière consommable d'un mot codé identifiant la matière consommable.

14. Disposition pour application du procédé selon la revendication 1 avec une unité de commande (12, 19) dans l'appareil, pour vérification d'un chiffre codé au moyen d'un chiffre codé de référence dans l'appareil avec des organes d'introduction (4, 10, 45) et des capteurs (90, 92, 97) pour détection directe d'états, **caractérisé par le fait que** les capteurs montés (90, 92, 97) destinés à la détection indirecte d'un autre état de l'appareil en termes de fonctionnement sont raccordés au microprocesseur et aux organes de mémorisation (41, 42, 50) de l'unité de commande (12, 19) en sachant que le microprocesseur est programmé
- pour la différentiation d'un état avant et après le remplacement d'une matière consommable en sachant qu'un état avant le remplacement signale la nécessité du remplacement et que l'autre état signale un remplacement de matière consommable effectué,
- pour générer et afficher sur écran (43) un avis pour le remplacement de la matière consommable et pour attendre l'introduction d'un chiffre codé pour lequel des organes d'introduction (4, 10, 45) sont prévus,
- pour vérifier la validité et l'authenticité de la matière consommable dans l'appareil après un remplacement de la matière consommable et l'introduction d'un chiffre codé en vérifiant tout d'abord sur la base de la plage de chiffres codés de référence si le chiffre codé qui a été introduit correspond à la plage de chiffres codés et en vérifiant ensuite s'il existe encore un chiffre codé de référence lié au chiffre codé qui a été introduit et la consommation du chiffre codé de référence mémorisé pouvant être affecté au chiffre codé introduit et
- pour la mémorisation de données liées au remplacement de la matière consommable ainsi que
- pour modifier la marche de l'appareil lorsque la vérification du chiffre codé introduit qui a été effectuée sur l'appareil a révélé une invalidité ou lorsque l'absence d'introduction d'un chiffre codé est constatée.

15. Disposition selon la revendication 14, **caractérisée par le fait que** la matière consommable est un ruban encreur dans une cassette (9) et que le capteur monté (90) est un codeur servant à la détection indirecte d'un autre état de l'appareil.

16. Disposition selon la revendication 14, **caractérisée par le fait que** la présence de matière consommable remplacée est constatée indirectement selon un principe à effet physique au moyen de capteurs montés (90, 92, 97) par interaction avec une analyse des données mesurées et mémorisées à l'aide du microprocesseur (46)

17. Disposition selon la revendication 16, **caractérisée par le fait que** la matière consommable est une encre à conductibilité électrique contenue dans une cassette à encrier (95) interchangeable, que le capteur (92) est raccordé aux contacts (93, 94) de la cassette à encrier (95) pour détecter la nécessité de remplacer la cassette à encrier (95) en sachant que la présence d'une cassette à encrier (95) remplacée est constatée indirectement par interaction avec une analyse des données mesurées et mémorisées effectuée à l'aide du microprocesseur (46).

18. Disposition selon la revendication 14, **caractérisée par le fait que** la matière consommable est une encre destinée à une tête d'impression par jet d'encre (57) à encrier intégré.

19. Disposition selon la revendication 14, **caractérisée par le fait que** la matière consommable est un liquide en sachant qu'il est possible d'introduire un code au moyen d'un codage de la matière d'emballage qui caractérise le liquide.

20. Disposition selon la revendication 14 **caractérisée par le fait que** la matière consommable n'est pas à l'état d'agrégation solide.

21. Disposition selon la revendication 14 **caractérisée par le fait que** la matière consommable est un corps solide.

22. Disposition selon la revendication 14 **caractérisée par le fait que** l'appareil est une affranchisseuse (1), qu'une mémorisation du nombre d'impressions/d'affranchissements s'opère en cours de fonctionnement, que le microprocesseur de l'affranchisseuse détecte un remplacement non autorisé par une anomalie dans le rapport entre le nombre d'affranchissements admissibles introduit par chiffre codé et les affranchissements réels et fournit des données à un centre de données (100) pour transmission de données.

23. Disposition selon la revendication 22 **caractérisée par le fait que** le microprocesseur (46) génère un affichage de code chiffré pour l'écran (43) et que la transmission des données s'effectue au moyen de codes par téléphone en sachant que les codes comportent l'information codée sur l'erreur de rapport.

24. Disposition selon la revendication 23 **caractérisée par le fait que** la transmission des données est déclenchée par l'utilisateur de l'affranchisseuse ou par une personne habilitée et/ou un agent des postes.

25. Disposition selon la revendication 22 **caractérisée par le fait que** la transmission des données s'effectue automatiquement par modem en sachant que les codes comportent l'information codée sur l'erreur de rapport.

26. Disposition selon la revendication 22 à 25 **caractérisée par le fait que** le centre de données (100) est un centre de données à télé-affranchissement (CDT) et que la transmission de données s'effectue en liaison avec un rechargement par avoir.

27. Disposition selon la revendication 22 **caractérisée par le fait que** le centre de données (100) est doté d'une banque de données (110) et d'organes sur le serveur destinés à vérifier si le nombre d'impressions/ d'affranchissements est plausible par rapport au nombre de remplacements de cassette effectués depuis la dernière recharge.
